# EUROPEAN PATENT SPECIFICATION

(11) **EP 3 285 490 B1**
(45) Date of publication and mention of the grant of the patent: **10.03.2021**
(21) Application number: 17193728.7
(22) Date of filing: 07.04.2011
(51) Int. Cl.: H04N 19/52

(54) **MOTION PREDICTION METHOD**
BEWEGUNGSVORHERSAGEVERFAHREN
PROCÉDÉ DE PRÉDICTION DE MOUVEMENTS

(30) Priority: 22.04.2010 US 326731 P; 01.12.2010 US 957644
(43) Date of publication of application: 21.02.2018
(62) Divisional of application: 11771542.5
(73) Proprietor: HFI Innovation Inc., Hsinchu County 302 (TW)
(72) Inventor: TSAI, Yu-Pao, Fongshan City, Kaohsiung County 830 (TW); FU, Chih-Ming, Hsinchu City 300 (TW); LIN, Jian-Liang, Su'ao Township, Yilan County 270 (TW); HUANG, Yu-Wen, Taipei City 104 (TW); LEI, Shaw-Min, Zhubei City, Hsinchu County 302 (TW)
(74) Representative: Hoefer & Partner Patentanwälte mbB

(56) References cited:
- YANG W ET AL: "Efficient Motion Vector Coding Algorithms Based on Adaptive Template Matching Techniques", 39. VCEG MEETING; 16-1-2010 - 22-1-2010; KYOTO; (VIDEO CODING EXPERTSGROUP OF ITU-T SG.16) URL: HTTP://WFTP3.ITU.INT/AV-ARCH/VIDEO-SITE/,, no. VCEG-AM16, 16 January 2010 (2010-01-16), XP030003736,
- LAROCHE G ET AL: "RD Optimized Coding for Motion Vector Predictor Selection", IEEE TRANSACTIONS ON CIRCUITS AND SYSTEMS FOR VIDEO TECHNOLOGY, INSTITUTE OF ELECTRICAL AND ELECTRONICS ENGINEERS, USA, vol. 18, no. 9, 1 September 2008 (2008-09-01), pages 1247-1257, XP011231739, ISSN: 1051-8215, DOI: 10.1109/TCSVT.2008.928882
- DAVIES (BBC) T: "Video coding technology proposal by BBC (and Samsung)", 1. JCT-VC MEETING; 15-4-2010 - 23-4-2010; DRESDEN; (JOINTCOLLABORATIVE TEAM ON VIDEO CODING OF ISO/IEC JTC1/SC29/WG11 AND ITU-TSG.16 ); URL: HTTP://WFTP3.ITU.INT/AV-ARCH/JCTVC-SITE/,, no. JCTVC-A125, 16 April 2010 (2010-04-16) , XP030007575,

## Description

### TECHNICAL FIELD

The invention relates to video processing, and more particularly to motion prediction of video data.

### BACKGROUND

The new upcoming H.264 compression standard can provide good video quality at substantially lower bit rates than previous standards by adopting features such as sub-pixel accuracy and multiple-referencing. The video compression process can be generally divided into 5 parts which include: inter-prediction/intra-prediction, transform/inverse-transform, quantization/inverse-quantization, loop filter, and entropy encoding. H.264 is used in various applications such as Blu-ray Discs, DVB broadcasting services, direct-broadcast satellite television service, cable television services, and real-time videoconferencing.

A video datastream comprises a series of frames. Each frame is divided into a plurality of coding units (e.g. macroblocks or extended macroblocks) for video processing. Each coding unit can be segmented into quad-tree partitions, and a leaf coding unit is called a prediction unit. A prediction unit can be further segmented into quad-tree partitions, and each partition is assigned with a motion parameter. In order to reduce the cost of transmitting enormous amount of motion parameters, a motion vector predictor (MVP) is calculated for each partition by referencing to adjacent coded blocks, coding efficiency can thus be improved as the motion of the adjacent blocks tends to have high spatial correlation.

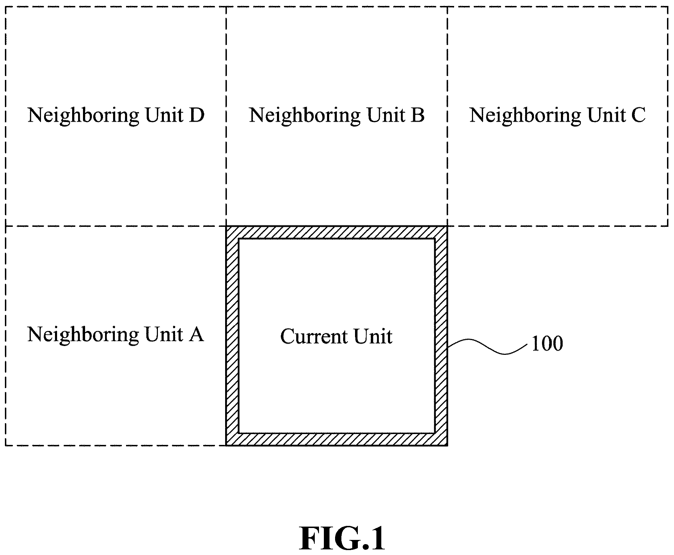

Referring to Fig. 1, a schematic diagram of a current unit 100 and a plurality of neighboring units A, B, C, and D are shown. In this example, both the current unit 100 and neighboring units A, B, C and D are the same size; however, these units are not necessary to be the same size. The motion vector predictor (MVP) of the current unit 100 is predicted according to the motion vectors of the neighboring units A, B, and C, or A, B, and D if C is unavailable. When the current unit 100 is a 16×16 block and a motion vector of the neighboring unit C exists, a medium of the motion vectors of the neighboring units A, B, and C is determined to be the MVP of the current unit 100. When the current unit 100 is a 16×16 block and a motion vector of the neighboring unit C does not exist, a medium of the motion vectors of the neighboring units A, B, and D is determined to be the MVP of the current unit 100. When the current unit 100 is an 8×16 partition in a left half of a 16×16 block, a motion vector of the neighboring unit A is determined to be the MVP of the current unit 100. When the current unit 100 is an 8×16 partition in a right half of a 16×16 block, a motion vector of the neighboring unit C is determined to be the MVP of the current unit 100. When the current unit 100 is a 16×8 partition in an upper half of a 16×16 block, a motion vector of the neighboring unit B is determined to be the MVP of the current unit 100. When the current unit 100 is a 16×8 partition in a lower half of a 16×16 block, a motion vector of the neighboring unit A is determined to be the MVP of the current unit 100.

When an MVP of a current unit is predicted according to the motion vectors of the neighboring units A, B, C, and D, the motion vectors of the neighboring units A, B, C, and D are not properly temporal scaled. For example, the reference frame of the neighboring units A, B, and C are different, and the motion vectors of the neighboring units A, B, and C correspond to the reference frames respectively. The temporal distances between each of the reference frames and the current frame are different. The motion vectors of the neighboring units A, B, and C should therefore be temporal scaled according to the temporal distances before predicting the MVP of the current unit 100 according to the motion vectors of the neighboring units A, B, and C.

The MVP of the current unit 100 is only predicted according to the motion vectors of the neighboring units A, B, C, and D. The prediction accuracy of MVP may be further improved if more candidate MVPs are considered and the best out of the candidate MVPs is selected by rate-distortion optimization. For example, motion vector competition (MVC) is proposed to select the best MVP from a predefined candidate set specified in sequence level. The predefined candidate set may include the H.264 standard predictor (e.g. the median MV of neighboring units), MV of the collocated unit at the same location in a reference frame as that of the current unit, and MVs of the neighboring units. The recommended number of MVPs in the predefined candidate set is two. The predefined candidate set, according to the motion vector competition method, is fixed in a video sequence level.

Another motion prediction method according to the preamble portion of claim 1 is known from YANG w ET AL: "Efficient Motion Vector Coding Algorithms Based on Adaptive Template Matching Techniques", no. VCEG-AM16, January 16, 2010.

A further motion prediction method is known from LAROCHE G ET AL: "RD Optimized Coding for Motion Vector Predictor Selection", IEEE TRANSACTIONS ON CIRCUITS AND SYSTEMS FOR VIDEO TECHNOLOGY, vol. 18, no. 9 September 1, 2008, pages 1247 to 1257.

### SUMMARY

The invention provides a motion prediction method and a motion prediction apparatus according to the features of the independent claims. The dependent claims contain advantageous embodiments of the present invention.

A detailed description is given in the following embodiments, provided as illustrative examples only, with reference to the accompanying drawings.

### BRIEF DESCRIPTION OF DRAWINGS

The invention can be more fully understood by reading the subsequent detailed description and examples with references made to the accompanying drawings, wherein:
Fig. 1 is a schematic diagram of a current coding unit and a plurality of neighboring coding units;
Fig. 2 is a block diagram of a video encoder according to the invention;
Fig. 3 is a schematic diagram of scaling of a motion vector of two candidate units;
Fig. 4 is a flowchart of a motion prediction method with temporal difference adjustment;
Fig. 5 is a schematic diagram of a plurality of candidate units for motion prediction of a current unit according to an embodiment of the invention;
Figs. 6A and 6B illustrate a flowchart of a motion prediction method with adaptively chosen candidate units according to an embodiment of the invention; and
Fig. 7 is a schematic diagram of a table recording motion difference values corresponding to different coded units and candidate units according to an embodiment of the invention.

### DETAILED DESCRIPTION

The following description is of the best-contemplated mode of carrying out the invention. This description is made for the purpose of illustrating the general principles of the invention and should not be taken in a limiting sense. The scope of the invention is best determined by reference to the appended claims.

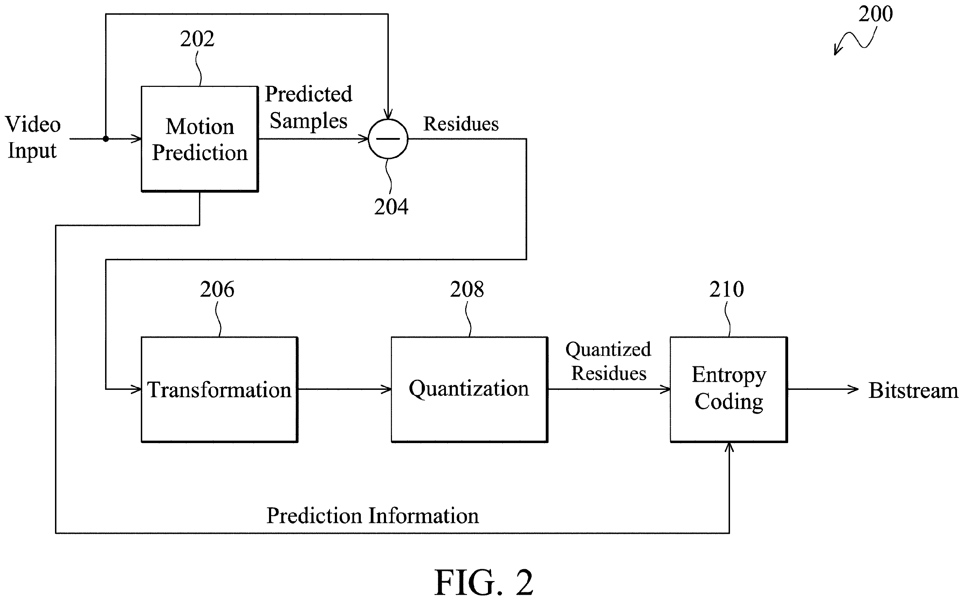

Referring to Fig. 2, a block diagram of a video encoder 200 is shown. In one embodiment, the video encoder 200 comprises a motion prediction module 202, a subtraction module 204, a transform module 206, a quantization module 208, and an entropy coding module 210. The video encoder 200 receives a video input and generates a bitstream as an output. The motion prediction module 202 performs motion prediction on the video input to generate predicted samples and prediction information. The subtraction module 204 then subtracts the predicted samples from the video input to obtain residues, thereby reducing video data amount from that of the video input to that of the residues. The residues are then sequentially sent to the transform module 206 and the quantization module 208. The transform module 206 performs a discrete cosine transform (DCT) on the residues to obtain transformed residues. The quantization module 208 then quantizes the transformed residues to obtain quantized residues. The entropy coding module 210 then performs entropy coding on the quantized residues and prediction information to obtain a bitstream as a video output.

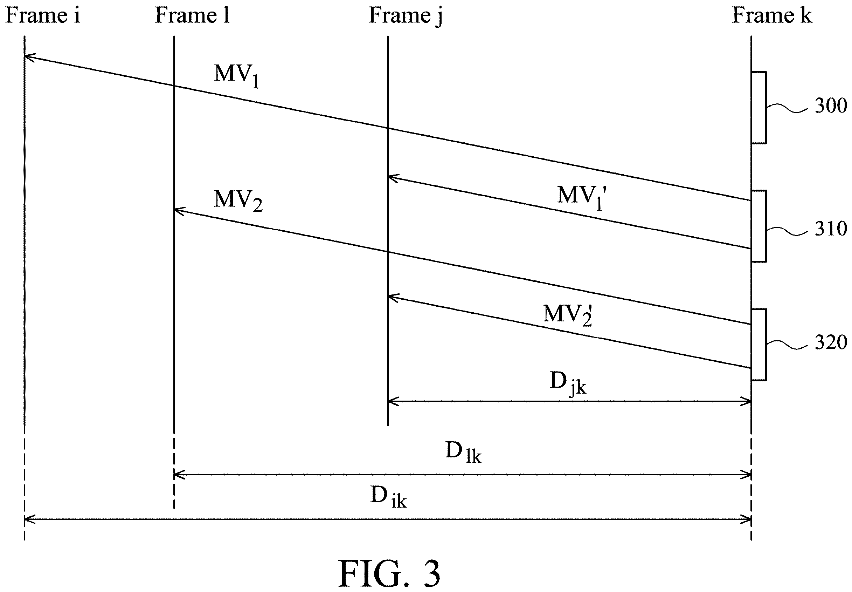

A motion prediction module 202 predicts a motion vector predictor (MVP) of a current unit of a current frame according to motion vectors of a plurality of candidate units. In one embodiment, the candidate units are neighboring units neighboring to the current unit. Before the motion prediction module 202 predicts the MVP of the current unit, temporal distances between reference frames of the candidate units and a current frame are calculated, and the motion vectors of the candidate units are scaled according to the temporal distances. Referring to Fig. 3, a schematic diagram of scaling of a motion vector of two candidate units 310 and 320 is shown. A current frame k comprises two candidate units 310 and 320 for motion prediction of a current unit 300. The first candidate unit 310 has a motion vector MV₁ in reference to a reference frame i, and a first temporal difference Dᵢₖ between the reference frame i and the current frame k is calculated. The second candidate unit 320 has a motion vector MV₂ in reference to a reference frame 1, and a second temporal difference Dₗₖ between the reference frame 1 and the current frame k is calculated.

A target temporal distance Dⱼₖ between a target searching frame j and the current frame k is then calculated. The target searching frame j is the selected reference frame. A first temporal scaling factor is then calculated by dividing the target temporal distance Dⱼₖ by the first temporal distance Dᵢₖ, and the motion vector MV₁ of the first candidate unit 310 is multiplied by the first temporal scaling factor (Dⱼₖ/Dᵢₖ) to obtain a scaled motion vector MV₁' corresponding to the first candidate unit 310. A second temporal scaling factor is then calculated by dividing the target temporal distance Dⱼₖ by the second temporal distance Dₗₖ, and the motion vector MV₂ of the second candidate unit 320 is multiplied by the second temporal scaling factor (Dⱼₖ/Dₗₖ) to obtain a scaled motion vector MV₂' corresponding to the second candidate unit 320. Thus, the scaled motion vectors MV₁' and MV₂' are both measured in reference to the target searching frame j, and the temporal distance difference factor is therefore removed from the scaled motion vectors MV₁' and MV₂'. The motion prediction module 202 can then predict the MVP of the current frame 300 according to the scaled motion vectors MV₁' and MV₂' of the candidate units 310 and 320.

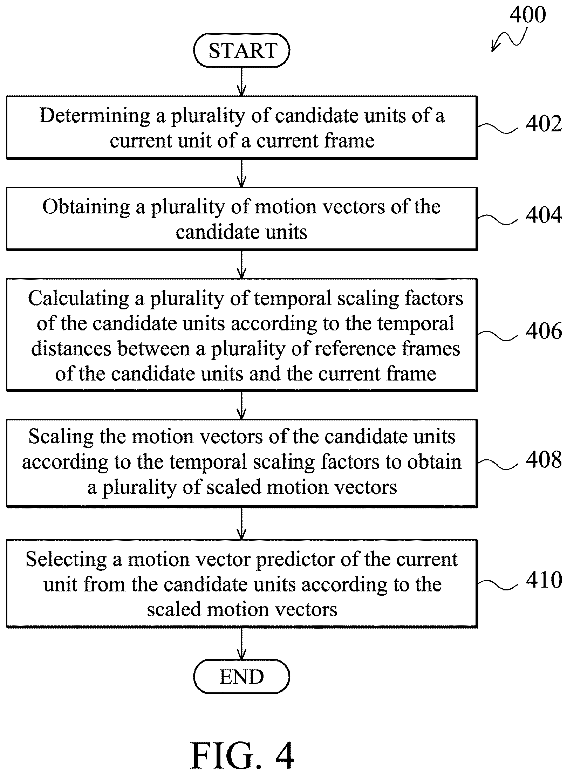

Referring to Fig. 4, a flowchart of a motion prediction method 400 with temporal difference adjustment is shown. First, a plurality of candidate units for motion prediction of a current unit of a current frame is determined (step 402). The candidate units and the current unit are blocks with same or different sizes, and each of these units can be a coding unit, a prediction unit, or a prediction unit partition. In one embodiment, the candidate units comprise a left unit A on the left side of the current unit, an upper unit B on an upper side of the current unit, an upper-right unit C in line with an upper-right direction of the current unit, and an upper-left unit D in line with an upper-left direction of the current unit. A plurality of motion vectors of the candidate units are then obtained (step 404). A plurality of temporal scaling factors of the candidate units is then calculated according to the temporal distances between reference frames of the candidate units and the current frame (step 406). In one embodiment, a plurality of temporal distances between the reference frames of the candidate units and the current frame is first calculated, a target temporal distance between a target searching frame and the current frame is also calculated, and the target temporal distance is then respectively divided by the temporal distances corresponding to the candidate units to obtain a plurality of temporal scaling factors corresponding to the candidate units, as shown in Fig. 3.

The motion vectors of the candidate units are then scaled according to the temporal scaling factors to obtain a plurality of scaled motion vectors (step 408). In one embodiment, the motion vectors of the candidate units are respectively multiplied by the temporal scaling factors of the candidate units to obtain the scaled motion vectors of the candidate units, as shown in Fig. 3. A motion vector predictor of the current unit is then selected from the candidate units according to the scaled motion vectors (step 410). In one embodiment, the scaled motion vectors are sorted, and a medium scaled motion vector is then selected from the scaled motion vectors as the MVP of the current unit.

When the motion prediction module 202 determines a MVP of a current unit according to a motion vector competition method, typically, only motion vectors of two candidate units determined in a sequence level are included in the candidate set for determining MVP of the current unit. In addition, the candidate set is not adaptively determined according to characteristics of the current unit. The performance of motion prediction may be improved if the candidate set is adaptively determined according to characteristics of the current unit.

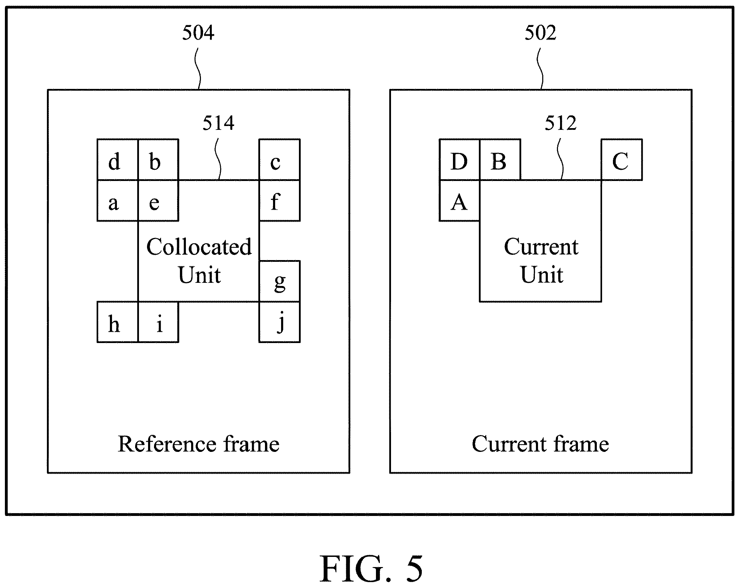

Referring to Fig. 5, a schematic diagram of a plurality of candidate units for motion prediction of a current unit 512 according to an embodiment of the invention is shown. In this embodiment, the current unit 512 and the candidate units are blocks with different sizes, for example, the current unit 512 is a 16x16 block and the candidate units are 4x4 blocks. In another embodiment, the size of current and candidate units can be the same or different, the size can be 4x4, 8x8, 8x16, 16x8, 16x16, 32x32, or 64x64. In this embodiment, motion vectors of four candidate units A, B, C, and D of the current frame 502 can be taken as candidates for determining the MVP of the current unit 512. In addition, a collocated unit 514 has the same location in a reference frame 504 as that of the current unit 512 in the current frame 502, and the motion vectors of a plurality of candidate units a∼j neighboring to the collocated unit 514 or within the collocated unit 514 can also be taken as candidates for determining the MVP of the current unit 512.

The candidate unit A in the current frame 502 is a partition on a left side of the current unit 512, the candidate unit B in the current frame 502 is a partition on an upper side of the current unit 512, the candidate unit C in the current frame 502 is a partition in line with an upper-right direction of the current unit 512, and the candidate unit D in the current frame 502 is a partition in line with an upper-left direction of the current unit 512. The candidate unit a in the reference frame 504 is a partition on a left side of the collocated unit 514, the candidate unit b in the reference frame 504 is a partition on an upper side of the collocated unit 514, the candidate unit c in the reference frame 504 is a partition in line with an upper-right direction of the collocated unit 514, and the candidate unit d in the reference frame 504 is a partition in line with an upper-right direction of the collocated unit 514. In addition, the candidate unit e in the reference frame 504 is a partition inside the collocated unit 514, the candidate units f and g in the reference frame 504 are partitions on a right side of the collocated unit 514, the candidate unit h in the reference frame 504 is a partition in line with a down-left direction of the collocated unit 514, the candidate unit i in the reference frame 504 is a partition on a down side of the collocated unit 514, and the candidate unit j in the reference frame 504 is a partition in line with a down-right direction of the collocated unit 514. In one embodiment, the candidate set for determining the MVP of the current unit 512 further comprises calculated motion vectors, for example, a motion vector equal to a medium of the motion vectors of the candidate units A, B, and C, a motion vector equal to a medium of the motion vectors of the candidate units A, B, and D, and a scaled MVP derived by a method similar to Fig. 4.

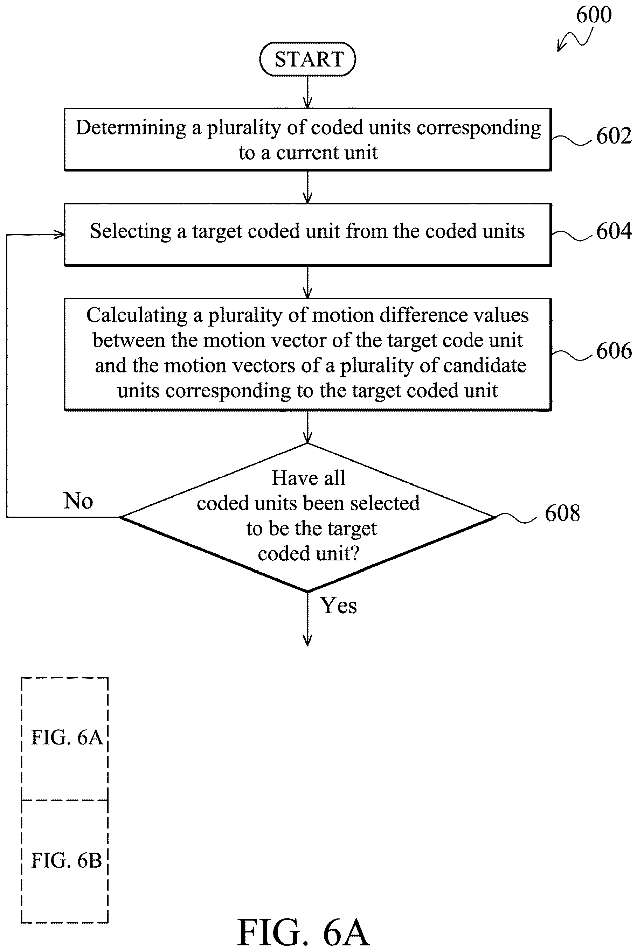

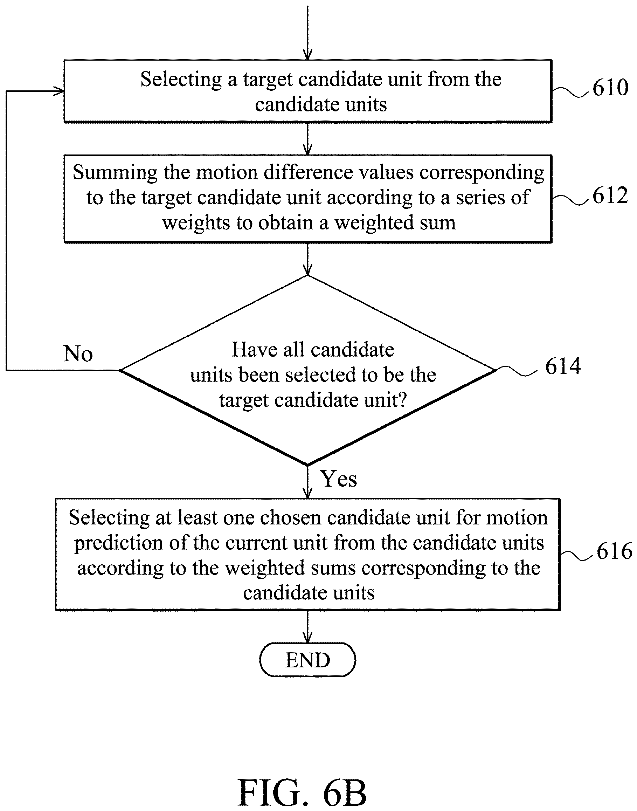

After a plurality of motion vectors corresponding to a current unit 512 is determined to be included in the candidate set, at least one motion vector is adaptively selected from the candidate set for motion prediction of the current unit 512. Referring to Fig. 6, a flowchart of a motion prediction method 600 with adaptively determination of a candidate set is shown. The candidate set for a current unit 512 is selected from a plurality of motion vectors corresponding to the current unit 512 (step 602). The motion vectors may comprise one or a combination of motion vectors of coded partitions/blocks in the same frame, calculated motion vectors, and motion vectors in the reference frame(s). In one embodiment, the candidate set corresponding to the current unit 512 shown in Fig. 5 comprises motion vectors of the units A, B, C, and D in the current frame 502 and a motion vector of the unit e in the reference frame 504. The candidate set may be determined according to one or more of the previous statistics, neighboring information, shape of the current unit, and position of the current unit. For example, the plurality of motion vectors corresponding to the current unit 512 is ranked according to neighboring information, and the first three motion vectors are selected to be included in the candidate set. A final MVP can be selected from the candidate set by the motion vector competition method or by some other selection methods.. In some embodiments, the plurality of motion vectors is ranked according to a selection order, and the selection order is determined by weighting sum of motion differences. The motion differences are calculated between each of the motion vector predictors and corresponding decoded motion vectors (i.e. real motion vectors) of the candidate units. The weights can be determined by the shape and position of the current unit, or the weights can be determined by the shape and position of the neighboring blocks.

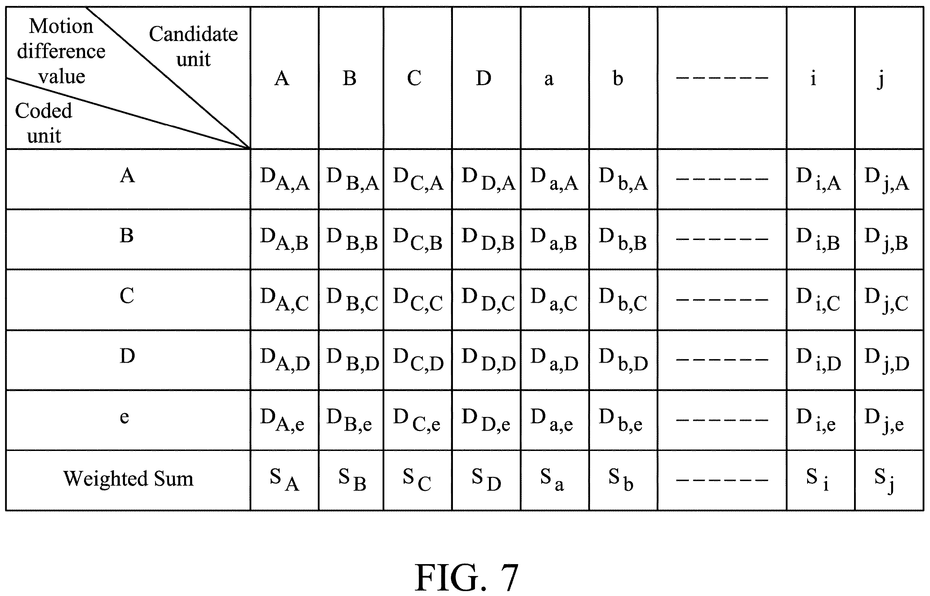

Referring to Fig. 7, a schematic diagram of a table recording motion difference values corresponding to different coded units and candidate units according to the invention are shown. For example, assume that the unit A is selected to be the target coded unit. A motion difference value D_{A,A} between the motion vectors of the unit A and a candidate unit A_{A} on a left side of the unit A is calculated. A motion difference value D_{B,A} between the motion vectors of the unit A and a candidate unit B_{A} on an upper side of the unit A is also calculated. A motion difference value D_{C,A} between the motion vectors of the unit A and a candidate unit C_{A} in line with an upper-right direction of the unit A is also calculated. A motion difference value D_{D,A} between the motion vectors of the unit A and a candidate unit D_{A} in line with an upper-left direction of the unit A is also calculated. A motion difference value D_{a,A} between the motion vectors of the unit A and a candidate unit a_{A} on a left side of a collocated unit corresponding to the unit A is also calculated. Similarly, the motion difference values D_{b,A}, ..., D_{j,A} corresponding to the coded unit A are also calculated.

The calculated motion difference values D_{A,A}, D_{B,A}, D_{C,A}, D_{D,A}, D_{a,A}, D_{b,A}, ..., D_{j,A} corresponding to the target coded unit A are then recorded in the table of Fig. 7. Another target coded unit B is then selected from the coded units (step 604), and the motion difference values D_{A,B}, D_{B,B}, D_{C,B}, D_{D,B}, D_{a,B}, D_{b,B}, ..., D_{j,B} corresponding to the target coded unit B are then calculated and recorded in the table of Fig. 7 (step 606). The steps 604 and 606 are repeated until the all coded units A, B, C, D, and e have been selected to be the target coded unit and the motion difference values corresponding to the coded units A, B, C, D, and e have been calculated (step 608).

After all motion differences corresponding to the coded units A, B, C, D, and e have been calculated, a selection order of the plurality of motion vectors are determined by weighting sum of the motion differences (step 610). For example, if the candidate unit A is selected as the target candidate unit, the motion difference values D_{A,A}, D_{A,B}, D_{A,C}, D_{A,D}, and D_{A,e} corresponding to the target candidate unit A are then summed according to a series of weights W_{A}, W_{B}, W_{C}, W_{D}, and Wₑ to obtain a weighted sum S_{A} = [(D_{A,A}×W_{A})+(D_{A,B}×W_{B})+ (D_{A,C}×W_{C})+ (D_{A,D}×W_{D})+ (D_{A,e}×Wₑ)] corresponding to the target candidate unit A, wherein the weights W_{A}, W_{B}, W_{C}, W_{D}, and Wₑ respectively correspond to one of the coded units A, B, C, D, and e. The other candidate units B, C, D, e, ...., i, and j are then sequentially selected to be the target candidate unit, and the weighted sums S_{B}, S_{C}, S_{D}, Sₑ, ..., Sᵢ, and Sⱼ corresponding to the candidate units B, C, D, e, ...., i, and j are then sequentially calculated (steps 610 and 612).

When all candidate units have been selected to be the target candidate unit and the weighted sums S_{A}, S_{B}, S_{C}, S_{D}, Sₑ, ..., Sᵢ, and Sⱼ corresponding to all the candidate units A, B, C, D, e, ...., i, and j have been calculated (step 614), at least one chosen candidate unit for motion prediction of the current unit is selected from the candidate units A, B, C, D, e, ...., i, and j according to the weighted sums S_{A}, S_{B}, S_{C}, S_{D}, Sₑ, ..., Sᵢ, and Sⱼ corresponding to the candidate units A, B, C, D, e, ...., i, and j (step 616). In one embodiment, the weighted sums S_{A}, S_{B}, S_{C}, S_{D}, Sₑ, ..., Sᵢ, and Sⱼ are sorted according to the sizes thereof, and the candidate unit corresponding to the smallest weighted sum is determined to be the chosen candidate unit. Finally, a motion vector of the current unit 512 is predicted according to the motion vector of the chosen candidate unit.

## Claims

1. A motion prediction method, comprising:
determining a plurality of candidate units corresponding to a current unit of a current frame,
wherein the candidate units comprise at least a neighboring unit of the current unit, a first reference unit which is within a collocated unit of the current unit, and a second reference unit neighboring to the collocated unit of the current unit;
wherein the collocated unit has the same location in a reference frame as that of the current unit in the current frame;
**characterized by**
identifying a subset of highest ranking motion vectors among a plurality of scaled motion vectors of the candidate units according to a selection order, wherein the selection order is determined by
• calculating for each candidate unit a plurality of motion difference values between the scaled motion vector of the candidate unit and previously decoded motion vectors of a plurality of coded units corresponding to the current unit;
• summing the motion difference values according to a series of weights to obtain a plurality of weighted sums respectively corresponding to the candidate units, wherein the weights are determined based on shape and position of the current unit; and;
• ranking the scaled motion vectors according to the weighted sums of the corresponding candidate units;
selecting a motion vector predictor for motion prediction of the current unit from the identified subset of the highest ranking motion vectors for encoding or decoding the current unit,
wherein a top-left corner of the second reference unit is overlapping with a lower-right corner of the collocated unit.

2. The motion prediction method as claimed in claim 1, wherein the method further comprises:
predicting a motion vector of the current unit according to the selected motion vector predictor.

3. The motion prediction method as claimed in claim 1, wherein calculation of the scaling factors comprises:
calculating the respective temporal distances between the reference frames of the motion vectors and a candidate unit-located frame.

4. The motion prediction method as claimed in claim 1, wherein calculation of the scaling factors comprises:
calculating the respective temporal distances between the reference frames of the motion vectors of the candidate units and a candidate unit-located frame;
calculating a target temporal distance between a target searching frame and the current frame; and
dividing the target temporal distance by each of the respective temporal distances to obtain the scaling factors.

5. The motion prediction method as claimed in claim 4, wherein scaling of the motion vectors of the candidate units comprises:
respectively multiplying the motion vectors of the candidate units by the scaling factors of the candidate units to obtain the scaled motion vectors of the candidate units.

6. The motion prediction method as claimed in claim 1, wherein the candidate units comprise at least one of a left unit on the left side of the current unit, an upper unit on an upper side of the current unit, an upper-right unit in line with an upper-right direction of the current unit, and an upper-left unit in line with an upper-left direction of the current unit.

7. The motion prediction method as claimed in claim 1, wherein the candidate units comprise at least one of an internal unit inside of the collocated unit and a down-right unit in line with a down-right direction of the collocated unit.

8. The motion prediction method as claimed in claim 1, wherein the current unit is a prediction unit.

9. The motion prediction method as claimed in claim 1, wherein at least one of the candidate units is a prediction unit or a prediction unit partition.

10. The motion prediction method as claimed in claim 1, wherein the motion vector predictor is explicitly selected from the candidate set based on prediction information in the bitstream.

11. The motion prediction method as claimed in claim 1, wherein a motion vector competition method is used to select the motion vector predictor for motion prediction of the current unit from the identified subset based on rate-distortion optimization.

12. The motion prediction method as claimed in claim 1, wherein a size of the subset of motion vectors is predetermined.

13. The motion prediction method as claimed in claim 12, wherein the size of the subset of motion vectors is 2 or 5.

14. An apparatus for motion prediction, comprising one or more circuits configured to:
determine a plurality of candidate units corresponding to a current unit of a current frame,
wherein the candidate units comprise at least a neighboring unit of the current unit, a first reference unit which is within a collocated unit of the current unit, and a second reference unit neighboring to the collocated unit of the current unit;
wherein the collocated unit has the same location in a reference frame as that of the current unit in the current frame;
**characterized in that** the one or more circuits are further adapted to:
identify a subset of highest ranking motion vectors among a plurality of scaled motion vectors of the candidate units according to a selection order, wherein the selection order is determined by
• calculating for each candidate unit a plurality of motion difference values between the scaled motion vector of the candidate unit and previously decoded motion vectors of a plurality of coded units corresponding to the current unit;
• summing the motion difference values according to a series of weights to obtain a plurality of weighted sums respectively corresponding to the candidate units, wherein the weights are determined based on shape and position of the current unit; and
• ranking the scaled motion vectors according to the weighted sums of the corresponding candidate units;
select a motion vector predictor for motion prediction of the current unit from the identified subset of the highest ranking motion vectors for encoding or decoding the current unit,
wherein a top-left corner of the second reference unit is overlapping with a lower-right corner of the collocated unit.

## Patentansprüche

1. Bewegungsvorhersageverfahren, umfassend
Bestimmen einer Mehrzahl von Kandidatenelementen, die zu einem aktuellen Element eines aktuellen Rahmens korrespondieren, wobei die Kandidatenelemente mindestens ein benachbartes Element des aktuellen Elements, ein erstes Referenzelement, welches sich innerhalb eines mit dem aktuellen Element zusammen angeordneten Elements befindet, und ein zweites Referenzelement, das zu dem zusammen mit dem aktuellen Element angeordneten Element benachbart ist, aufweisen;
wobei das zusammen angeordnete Element die gleiche Position in einem Referenzrahmen aufweist wie diejenige des aktuellen Elements in dem aktuellen Rahmen;
**gekennzeichnet durch**
Identifizieren einer Untergruppe von höchstrangigen Bewegungsvektoren aus einer Mehrzahl von skalierten Bewegungsvektoren der Kandidatenelemente gemäß einer Selektionsreihenfolge, wobei die Selektionsreihenfolge bestimmt wird durch
* Berechnen einer Mehrzahl von Bewegungsdifferenzwerten zwischen dem skalierten Bewegungsvektor des Kandidatenelements und vorhergehend decodierten Bewegungsvektoren einer Mehrzahl von codierten Elementen, die zu dem aktuellen Element korrespondieren, für jedes Kandidatenelement;
* Aufsummieren der Bewegungsdifferenzwerte gemäß einer Serie von Gewichtungen, um eine Mehrzahl von gewichteten Summen zu erhalten, die jeweils zu den Kandidatenelementen korrespondieren, wobei die Gewichtungen basierend auf einer Form und einer Position des aktuellen Elements bestimmt werden; und
* Ordnen der skalierten Bewegungsvektoren gemäß den gewichteten Summen der korrespondierenden Kandidatenelemente;
Auswählen eines Bewegungsvektor-Prädiktors für eine Bewegungsvorhersage des aktuellen Elements von der identifizierten Untergruppe der höchstrangigen Bewegungsvektoren zum Codieren oder Decodieren des aktuellen Elements,
wobei eine obere linke Ecke des zweiten Referenzelements mit einer unteren rechten Ecke des zusammen angeordneten Elements überlappt.

2. Bewegungsvorhersageverfahren gemäß Anspruch 1, wobei das Verfahren weiter umfasst:
Vorhersagen eines Bewegungsvektors des aktuellen Elements gemäß dem ausgewählten Bewegungsvektor-Prädiktor.

3. Bewegungsvorhersageverfahren gemäß Anspruch 1, wobei die Berechnung der Skalierungsfaktoren umfasst:
Berechnen der jeweiligen Zeitabstände zwischen den Referenzrahmen der Bewegungsvektoren und einem bei dem Kandidatenelement liegenden Rahmen.

4. Bewegungsvorhersageverfahren gemäß Anspruch 1, wobei die Berechnung der Skalierungsfaktoren umfasst:
Berechnen der jeweiligen Zeitabstände zwischen den Referenzrahmen der Bewegungsvektoren der Kandidatenelemente und bei dem Kandidatenelement liegenden Rahmen;
Berechnen eines Zielzeitabstands zwischen einem Zielsuchrahmen und dem aktuellen Rahmen; und
Teilen des Zielzeitabstands durch jeden der jeweiligen Zeitabstände, um die Skalierungsfaktoren zu erhalten.

5. Bewegungsvorhersageverfahren gemäß Anspruch 4, wobei das Skalieren der Bewegungsvektoren der Kandidatenelemente umfasst:
jeweils Multiplizieren der Bewegungsvektoren der Kandidatenelemente mit den Skalierungsfaktoren der Kandidatenelemente, um die skalierten Bewegungsvektoren der Kandidatenelemente zu erhalten.

6. Bewegungsvorhersageverfahren gemäß Anspruch 1, wobei die Kandidatenelemente mindestens ein linkes Element auf der linken Seite des aktuellen Elements, ein oberes Element auf einer oberen Seite des aktuellen Elements, ein oberes rechtes Element in einer Linie mit einer oberen rechten Richtung des aktuellen Elements und ein oberes linkes Element in einer Linie mit einer oberen linken Richtung des aktuellen Elements aufweisen.

7. Bewegungsvorhersageverfahren gemäß Anspruch 1, wobei die Kandidatenelemente mindestens eins von einem internen Element innerhalb des zusammen angeordneten Elements und einem unteren rechten Element in einer Linie mit einer unteren rechten Richtung des zusammen angeordneten Elements aufweisen.

8. Bewegungsvorhersageverfahren gemäß Anspruch 1, wobei das aktuelle Element ein Prädiktionselement ist.

9. Bewegungsvorhersageverfahren gemäß Anspruch 1, wobei mindestens eins der Kandidatenelemente ein Prädiktionselement oder eine Prädiktionselementpartition ist.

10. Bewegungsvorhersageverfahren gemäß Anspruch 1, wobei der Bewegungsvektor-Prädiktor basierend auf Prädiktionsinformationen in dem Bitstrom explizit von dem Kandidatensatz ausgewählt wird.

11. Bewegungsvorhersageverfahren gemäß Anspruch 1, wobei ein Bewegungsvektorwettbewerbsverfahren verwendet wird, um den Bewegungsvektor-Prädiktor für eine Bewegungsvorhersage des aktuellen Elements von der identifizierten Untergruppe basierend auf einer Rate-Verzerrungsoptimierung auszuwählen.

12. Bewegungsvorhersageverfahren gemäß Anspruch 1, wobei eine Größe der Untergruppe von Bewegungsvektoren vorbestimmt ist.

13. Bewegungsvorhersageverfahren gemäß Anspruch 12, wobei die Größe der Untergruppe von Bewegungsvektoren 2 oder 5 ist.

14. Vorrichtung für eine Bewegungsvorhersage, die eine oder mehrere Schaltungen aufweist, die eingerichtet sind zum:
Bestimmen einer Mehrzahl von Kandidatenelementen, die zu einem aktuellen Element eines aktuellen Rahmens korrespondieren, wobei die Kandidatenelemente mindestens ein benachbartes Element des aktuellen Elements, ein erstes Referenzelement, welches sich innerhalb eines mit dem aktuellen Element zusammen angeordneten Elements befindet, und ein zweites Referenzelement, das zu dem zusammen mit dem aktuellen Element angeordneten Element benachbart ist, aufweisen;
wobei das zusammen angeordnete Element die gleiche Position in einem Referenzrahmen aufweist wie diejenige des aktuellen Elements in dem aktuellen Rahmen;
**dadurch gekennzeichnet, dass** die eine oder die mehreren Schaltungen weiter angepasst sind zum:
Identifizieren einer Untergruppe von höchstrangigen Bewegungsvektoren aus einer Mehrzahl von skalierten Bewegungsvektoren der Kandidatenelemente gemäß einer Selektionsreihenfolge, wobei die Selektionsreihenfolge bestimmt wird durch
* Berechnen einer Mehrzahl von Bewegungsdifferenzwerten zwischen dem skalierten Bewegungsvektor des Kandidatenelements und vorhergehend decodierten Bewegungsvektoren einer Mehrzahl von codierten Elementen, die zu dem aktuellen Element korrespondieren, für jedes Kandidatenelement;
* Aufsummieren der Bewegungsdifferenzwerte gemäß einer Serie von Gewichtungen, um eine Mehrzahl von gewichteten Summen zu erhalten, die jeweils zu den Kandidatenelementen korrespondieren, wobei die Gewichtungen basierend auf einer Form und einer Position des aktuellen Elements bestimmt werden; und
* Ordnen der skalierten Bewegungsvektoren gemäß den gewichteten Summen der korrespondierenden Kandidatenelemente;
Auswählen eines Bewegungsvektor-Prädiktors für eine Bewegungsvorhersage des aktuellen Elements von der identifizierten Untergruppe der höchstrangigen Bewegungsvektoren zum Codieren oder Decodieren des aktuellen Elements,
wobei eine obere linke Ecke des zweiten Referenzelements mit einer unteren rechten Ecke des zusammen angeordneten Elements überlappt.

## Revendications

1. Procédé de prédiction de mouvement, comprenant:
déterminer une pluralité d'unités candidates correspondant à une unité actuelle d'une trame actuelle,
dans lequel les unités candidates comprennent au moins une unité voisine de l'unité actuelle, une première unité de référence qui se trouve dans une unité colocalisée de l'unité actuelle, et une deuxième unité de référence voisine de l'unité colocalisée de l'unité actuelle ;
dans lequel l'unité colocalisée a le même emplacement dans une trame de référence que celui de l'unité actuelle dans la trame actuelle ;
**caractérisé par** le fait :
identifier un sous-ensemble de vecteurs de mouvement de rang le plus élevé parmi une pluralité de vecteurs de mouvement mis à l'échelle des unités candidates selon un ordre de sélection, où l'ordre de sélection est déterminé par le fait
• calculer, pour chaque unité candidate, une pluralité de valeurs de différence de mouvement entre le vecteur de mouvement mis à l'échelle de l'unité candidate et des vecteurs de mouvement précédemment décodés d'une pluralité d'unités codées correspondant à l'unité actuelle ;
• additionner les valeurs de différence de mouvement selon une série de poids pour obtenir une pluralité de sommes pondérées correspondant respectivement aux unités candidates, où les poids sont déterminés sur la base de la forme et de la position de l'unité actuelle ; et ;
• classer les vecteurs de mouvement mis à l'échelle en fonction des sommes pondérées des unités candidates correspondantes ;
sélectionner un prédicteur de vecteur de mouvement pour la prédiction de mouvement de l'unité actuelle à partir du sous-ensemble identifié des vecteurs de mouvement de rang le plus élevé pour coder ou décoder l'unité actuelle,
dans lequel un coin supérieur gauche de la deuxième unité de référence chevauche un coin inférieur droit de l'unité colocalisée.

2. Procédé de prédiction de mouvement tel que revendiqué dans la revendication 1, dans lequel le procédé comprend en outre :
prédire un vecteur de mouvement de l'unité actuelle selon le prédicteur de vecteur de mouvement sélectionné.

3. Procédé de prédiction de mouvement tel que revendiqué dans la revendication 1, dans lequel le calcul des facteurs d'échelle comprend:
calculer les distances temporelles respectives entre les trames de référence des vecteurs de mouvement et une trame localisée d'unité candidate.

4. Procédé de prédiction de mouvement tel que revendiqué dans la revendication 1, dans lequel le calcul des facteurs d'échelle comprend:
calculer les distances temporelles respectives entre les trames de référence des vecteurs de mouvement des unités candidates et une trame localisée d'unité candidate ;
calculer une distance temporelle cible entre une trame de recherche cible et la trame actuelle ; et
diviser la distance temporelle cible par chacune des distances temporelles respectives pour obtenir les facteurs d'échelle.

5. Procédé de prédiction de mouvement tel que revendiqué dans la revendication 4, dans lequel la mise à l'échelle des vecteurs de mouvement des unités candidates comprend :
multiplier respectivement les vecteurs de mouvement des unités candidates par les facteurs d'échelle des unités candidates pour obtenir les vecteurs de mouvement mis à l'échelle des unités candidates.

6. Procédé de prédiction de mouvement tel que revendiqué dans la revendication 1, dans lequel les unités candidates comprennent au moins l'une d'une unité gauche sur le côté gauche de l'unité actuelle, d'une unité supérieure sur un côté supérieur de l'unité actuelle, d'une unité supérieure droite en ligne avec une direction supérieure droite de l'unité actuelle, et d'une unité supérieure gauche en ligne avec une direction supérieure gauche de l'unité actuelle.

7. Procédé de prédiction de mouvement tel que revendiqué dans la revendication 1, dans lequel les unités candidates comprennent au moins l'une d'une unité interne dans l'unité colocalisée et d'une unité en bas-droite en ligne avec une direction en bas-droite de l'unité colocalisée.

8. Procédé de prédiction de mouvement tel que revendiqué dans la revendication 1, dans lequel l'unité actuelle est une unité de prédiction.

9. Procédé de prédiction de mouvement tel que revendiqué dans la revendication 1, dans lequel au moins l'une des unités candidates est une unité de prédiction ou une partition d'unité de prédiction.

10. Procédé de prédiction de mouvement tel que revendiqué dans la revendication 1, dans lequel le prédicteur de vecteur de mouvement est explicitement sélectionné à partir de l'ensemble candidat sur la base des informations de prédiction dans le flux de bits.

11. Procédé de prédiction de mouvement tel que revendiqué dans la revendication 1, dans lequel un procédé de compétition de vecteurs de mouvement est utilisé pour sélectionner le prédicteur de vecteur de mouvement pour la prédiction de mouvement de l'unité actuelle à partir du sous-ensemble identifié sur la base d'une optimisation de distorsion de débit.

12. Procédé de prédiction de mouvement tel que revendiqué dans la revendication 1, dans lequel une taille du sous-ensemble de vecteurs de mouvement est prédéterminée.

13. Procédé de prédiction de mouvement tel que revendiqué dans la revendication 12,
dans lequel la taille du sous-ensemble de vecteurs de mouvement est de 2 ou 5.

14. Appareil de prédiction de mouvement, comprenant un ou plusieurs circuit(s) configuré(s) pour :
déterminer une pluralité d'unités candidates correspondant à une unité actuelle d'une trame actuelle,
dans lequel les unités candidates comprennent au moins une unité voisine de l'unité actuelle, une première unité de référence qui se trouve dans une unité colocalisée de l'unité actuelle, et une deuxième unité de référence voisine de l'unité colocalisée de l'unité actuelle ;
dans lequel l'unité colocalisée a le même emplacement dans une trame de référence que celui de l'unité actuelle dans la trame actuelle ;
**caractérisé en ce que** le ou les plusieurs circuit(s) est/sont en outre adapté(s) pour :
identifier un sous-ensemble de vecteurs de mouvement de rang le plus élevé parmi une pluralité de vecteurs de mouvement mis à l'échelle des unités candidates selon un ordre de sélection, où l'ordre de sélection est déterminé par le fait
• de calculer, pour chaque unité candidate, une pluralité de valeurs de différence de mouvement entre le vecteur de mouvement mis à l'échelle de l'unité candidate et des vecteurs de mouvement précédemment décodés d'une pluralité d'unités codées correspondant à l'unité actuelle ;
• d'additionner les valeurs de différence de mouvement selon une série de poids pour obtenir une pluralité de sommes pondérées correspondant respectivement aux unités candidates, où les poids sont déterminés sur la base de la forme et de la position de l'unité actuelle ; et
• de classer les vecteurs de mouvement mis à l'échelle en fonction des sommes pondérées des unités candidates correspondantes ;
sélectionner un prédicteur de vecteur de mouvement pour la prédiction de mouvement de l'unité actuelle à partir du sous-ensemble identifié des vecteurs de mouvement de rang le plus élevé pour coder ou décoder l'unité actuelle,
dans lequel un coin supérieur gauche de la deuxième unité de référence chevauche un coin inférieur droit de l'unité colocalisée.
